(19) Europäisches Patentamt
European Patent Office
Office européen des brevets

(11) **EP 4 578 881 A1**

(12) **EUROPEAN PATENT APPLICATION**
published in accordance with Art. 153(4) EPC

(43) Date of publication:
**02.07.2025 Bulletin 2025/27**

(21) Application number: **23857690.4**

(22) Date of filing: **22.08.2023**

(51) International Patent Classification (IPC):
***C08B 31/00*** (2006.01) ***C08B 37/08*** (2006.01)
***C08L 3/04*** (2006.01) ***C08L 5/08*** (2006.01)
***C08K 5/00*** (2006.01)

(52) Cooperative Patent Classification (CPC):
**C08B 31/00; C08B 37/003; C08K 5/00; C08L 3/04; C08L 5/08**

(86) International application number:
**PCT/KR2023/012393**

(87) International publication number:
**WO 2024/043658 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.08.2022 KR 20220104557**

(71) Applicant: **LG Chem, Ltd.**
**Yeongdeungpo-gu**
**Seoul 07336 (KR)**

(72) Inventors:
- **KANG, Sun Ah**
  **Daejeon 34122 (KR)**
- **CHO, Beom Shin**
  **Daejeon 34122 (KR)**
- **YUN, Hae Sung**
  **Daejeon 34122 (KR)**
- **CHOI, Hyung Sam**
  **Daejeon 34122 (KR)**
- **HAM, Kyung Rok**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYMER COMPOSITION**

(57) The present specification discloses a polymer composition. Th polymer composition comprises a polysaccharide component, where the polysaccharide component contains a radically polymerizable functional group and a non-radically polymerizable functional group. Such a polysaccharide component can form a polymer including polymer chains formed by the polymerization of the radically polymerizable functional groups and covalent bonds formed by the reaction of the non-radically polymerizable functional groups. The polymer can form an absorbent material having excellent absorptivity, form a biodegradable material having excellent biodegradability, or form a material which is an absorbent material and simultaneously a biodegradable material. The present application can also provide a use of the polymer composition or the polymer.

[Figure 1]

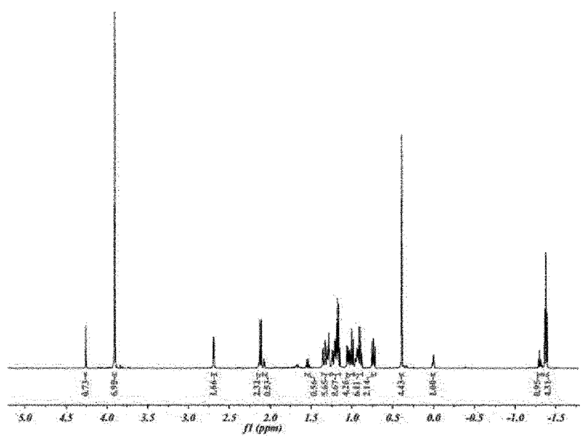


EP 4 578 881 A1

## Description

### Technical Field

This application claims the benefit of priority based on Korean Patent Application No. 10-2022-0104557 dated August 22, 2022, the disclosure of which is incorporated herein by reference in its entirety.
The present application relates to a polymer composition and a use thereof.

### Background Art

A hydrogel polymer or hydrogel is generally defined as a cross-linked hydrophilic polymer. Such a polymer can be used as a material called an SAP (Super Absorbent Polymer). The SAP is a material that can absorb moisture tens to thousands of times its own weight. The SAP is used for various applications, such as sanitary products such as hygiene products or diapers, medical products, household materials, agricultural materials, horticultural materials, transportation materials, civil engineering and construction materials, materials related to electrical and electronic devices, or water treatment agents.
The most widely used hydrogel as a material for the SAP is a vinyl-based polymer such as cross-linked polyacrylic acid.
Such materials are relatively inexpensive and have excellent water absorption capacity, but cause various problems because they remain semi-permanently even after disposal.
To solve such problems, there are various attempts to manufacture the SAP from so-called biodegradable materials.
However, the biodegradable materials known to date do not form the SAP with balanced physical properties. For example, the most representative physical property required for the SAP is absorption capacity, but in the SAP of a biodegradable material known to date, at least one characteristic of absorption capacity and biodegradability is not satisfactorily secured, or in some cases, both physical properties are not secured at an appropriate level.

## Disclosure

### Technical Problem

The present application is intended to provide a polymer composition capable of securing simultaneously excellent absorption capacity and biodegradability, and a use thereof.

### Technical Solution

Among the physical properties mentioned in this specification, when the measurement temperature affects the physical property value, the relevant physical property means a physical property measured at room temperature, unless specifically mentioned otherwise.
In this specification, the term room temperature is a natural temperature without heating or cooling, which may mean, for example, any one temperature in a range of about 10°C to 30°C, or a temperature of about 23°C or so, or a temperature of about 25°C or so.
Among the physical properties mentioned in this specification, when the measurement pressure affects the physical property value, the relevant physical property means a physical property measured at normal pressure, unless specifically mentioned otherwise.
In this specification, the term normal pressure refers to a pressure when not particularly reduced or increased, which may mean a pressure of normal atmospheric pressure or so, for example, a pressure of about 740 mmHg to 780 mmHg or so, or a pressure of about 1 atmosphere or so.
Among the physical properties mentioned in this specification, when the measurement humidity affects the physical property value, the relevant physical property means a physical property measured at a humidity in a standard state, unless specifically stated otherwise. The humidity in the standard state is usually a humidity of about 40%, 45%, 50%, 55%, or 60% or so as a relative humidity.
In this specification, the term alkyl or alkyl group means an alkyl or alkyl group with 1 to 20 carbon atoms, 1 to 16 carbon atoms, 1 to 12 carbon atoms, 1 to 8 carbon atoms, or 1 to 4 carbon atoms, unless otherwise specified. Such an alkyl or alkyl group may be linear, branched, or cyclic. Such an alkyl or alkyl group may also be optionally substituted with one or more substituents.
In this specification, unless otherwise specified, the term alkylene or alkylene group means a functional group which is connected to another object by separating two hydrogen atoms from an alkane, and it has a structure that the two

hydrogen atoms are separated from other carbon atoms of the alkane. Such an alkylene or alkylene group may be an alkylene or alkylene group with 2 to 20 carbon atoms, 2 to 16 carbon atoms, 2 to 12 carbon atoms, 2 to 8 carbon atoms, or 2 to 4 carbon atoms. Such an alkylene or alkylene group may be linear, branched, or cyclic. Such an alkylene or alkylene group may also be optionally substituted with one or more substituents.

In this specification, unless otherwise specified, the term alkylidene or alkylidene group means a functional group which is connected to another object by separating two hydrogen atoms from an alkane, and it has a structure that the two hydrogen atoms are separated from one carbon atom of the alkane. Such an alkylidene or alkylidene group may be an alkylidene or alkylidene group with 1 to 20 carbon atoms, 1 to 16 carbon atoms, 1 to 12 carbon atoms, 1 to 8 carbon atoms, or 1 to 4 carbon atoms. Such an alkylidene or alkylidene group may be linear, branched, or cyclic. Such an alkylidene or alkylidene group may also be optionally substituted with one or more substituents.

In this specification, the term absorbent material means a material exhibiting centrifuge retention capacity (CRC) as defined herein.

In this specification, the term biodegradable material means a material exhibiting a degree of biodegradability as defined herein.

The present application relates to a polymer composition. The polymer composition, or a polymer (or polymer material) to be described below may be the above-described absorbent material. The polymer composition, or a polymer (or polymer material) to be described below may be the above-described biodegradable material. The polymer composition, or a polymer (or polymer material) to be described below may be the above-described biodegradable material as well as the above-described absorbent material.

In this specification, the term polymer composition means a mixture comprising a polymer, and comprising other components as well, or a mixture comprising two or more polymers.

The polymer may mean a substance formed by connecting two or more unitary bodies by covalent bonds. **In** one example, the polymer may be a substance comprising a structure in which two or more unitary bodies are connected by covalent bonds, and having a molecular weight of a certain level or more. The range of the molecular weight is not limited, but the molecular weight of the polymer, in terms of weight average molecular weight (Mw), may be approximately 500 g/mol or more. The upper limit of the weight average molecular weight is not particularly limited, and for example, the weight average molecular weight of the polymer may be about 1,000,000 g/mol or less or so. The weight average molecular weight is a value measured by GPC (Gel Permeation Chromatograph) using polystyrene as a calibration standard sample.

The lower limit of the polymer content in the polymer composition may be 55 wt%, 60 wt%, 65 wt%, 70 wt%, 75 wt%, 80 wt%, 85 wt%, 90 wt%, or 95 wt% or so, and the upper limit thereof may be 100 wt%, less than 100 wt%, 98 wt%, 96 wt%, 94 wt%, 92 wt%, or 90 wt% or so. The ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. **In** addition, when the polymer composition comprises a solvent, the polymer content may be the polymer content in the polymer composition excluding the solvent.

The polymer may be a polysaccharide component.

In this specification, the term polysaccharide component means a component composed of one or more polysaccharides. That is, the polysaccharide component comprises only polysaccharides. The polysaccharide contained in the polysaccharide component may be one or, two or more types. Here, two or more polysaccharides may also mean different types of polysaccharides, and may also comprise polysaccharides in which they have the same type, but physical properties such as a molecular weight are different.

The term polysaccharide has a meaning known in the industry. The polysaccharide generally refers to a polymer molecule in which two or more unitary bodies are linked by covalent bonds. Here, in one example, the covalent bond connecting the unitary bodies may be a glycosidic bond.

The unitary body forming the polysaccharide may be a biomolecule composed of carbon, hydrogen, and oxygen, or composed of carbon, hydrogen, oxygen, and nitrogen. In this specification, the term biomolecule is interpreted to have the meaning generally applied in the industry. Typically, as an example of the biomolecule in the industry, monosaccharides such as glucose, galactose, fructose or xylose, disaccharides such as sucrose, lactose, maltose or trehalose, polyols such as sorbitol or mannitol, oligosaccharides such as maltodextrin, dextrin, raffinose, stachyose or fructo-oligosaccharide and/or amino sugars such as glucosamine or N-acetal glucosamine, and the like are known, but the types of biomolecules in the present application are not limited to the foregoing.

If the polymer (e.g., polysaccharide component) contained in the polymer composition is in a cross-linked state and has absorption capacity, the relevant polymer composition may be herein referred to as the hydrogel polymer material, polymer material, or hydrogel, or may simply form materials called polymers. Such a hydrogel polymer material or hydrogel, polymer material or polymer may also be in a powder state formed through a grinding process or the like.

The polymer composition may comprise only the polysaccharide component, or may further comprise other components in addition to the polysaccharide component, as the polymer. In the polymer composition, the polysaccharide

component may exist in a polymerized and cross-linked state. In this case, the polymer composition may also be referred to as a polymer material, which is described below, or simply as a polymer.

Examples of other components that may be included in the polymer composition together with the polysaccharide component are not particularly limited, but may be exemplified by a cross-linking agent cross-linking the polysaccharide component, a polymer different from the polysaccharide component, or an initiator inducing polymerization of the polysaccharide component, and the like.

The lower limit of the content of the polysaccharide component in the polymer composition may be 55 wt%, 60 wt%, 65 wt%, 70 wt%, 75 wt%, 80 wt%, 85 wt%, 90 wt%, 92 wt%, 94 wt%, 96 wt%, or 98 wt% or so, and the upper limit thereof may be 100 wt%, less than 100 wt%, 98 wt%, 96 wt%, 94 wt%, 92 wt%, or 90 wt% or so. The ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. In addition, when the polymer composition comprises a solvent, the polymer content may be the content of the polysaccharide component in the polymer composition excluding the solvent.

The higher the ratio of the polysaccharide component, the greater the biodegradability of the material. In the present application, by applying a specific type of polysaccharide as the polysaccharide component, appropriate polymerization and cross-linking can be performed simultaneously, and the polymer composition after polymerization and cross-linking can exhibit excellent absorption capacity and biodegradability at the same time.

When the polymer composition forms an absorbent material, the lower limit of centrifuge retention capacity (CRC) of the polymer composition, or the polymer material or polymer formed therefrom according to EDANA (European Disposables and Nonwovens Association) method WSP 241.3 may be 10 g/g, 12 g/g, 13 g/g, 14 g/g, 15 g/g, 16 g/g, 17 g/g, 18 g/g, 19 g/g, 20 g/g, 21 g/g, 22 g/g, or 23 g/g or so, and the upper limit thereof may be 60 g/g, 55 g/g, 50 g/g, 45 g/g, 40 g/g, 35 g/g, 30 g/g, 25 g/g, 20 g/g, 19 g/g, 18 g/g, or 17 g/g or so. The centrifuge retention capacity (CRC) may be within a range of more than or equal to, or more than any one of the above-described lower limits; or within a range of less than or equal to, or less than any one of the above-described upper limits while being more than or equal to, or more than any one of the above-described lower limits. The polymer composition may exhibit the retention capacity before or after the polysaccharide component is polymerized and cross-linked. The centrifuge retention capacity can be measured according to the regulations of EDANA (European Disposables and Nonwovens Association) WSP 241.3, and the details thereof are described in "1. Centrifuge retention capacity (CRC) evaluation" of Example sections in this specification.

When the polymer composition, or the polymer or polymer material formed therefrom exhibits the centrifuge retention capacity, the polymer composition, polymer, or polymer material may be defined as an absorbent material.

The polymer composition or material formed therefrom may exhibit excellent biodegradability. For example, the polymer composition, or the polymer material or polymer formed therefrom may be a biodegradable material. For example, the lower limit of biodegradability of the polymer composition, or the polymer material or polymer formed therefrom may be 60%, 62%, 64%, 66%, 68%, 70%, 72%, 74%, 76%, 78%, 80%, 82%, 84%, 86%, or 88% or so, and the upper limit thereof may be about 100%, 98%, 96%, 94%, 92%, 90%, 88%, 86%, 84%, 82%, 80%, 78%, 76%, 74%, or 72% or so. The biodegradability may be within a range of more than or equal to, or more than any one of the above-described lower limits; or within a range of less than or equal to, or less than any one of the above-described upper limits while being more than or equal to, or more than any one of the above-described lower limits. The polymer composition may exhibit the biodegradability before or after the polysaccharide component is polymerized and cross-linked. The biodegradability can be measured according to the provisions of ISO 14855-1 (2005), and the details thereof are described in "2. Measurement of biodegradability" of Example sections in this specification.

The polymer composition of the present application can exhibit excellent biodegradability together with the excellent absorptivity. In another example, the polymer composition can form a material exhibiting excellent biodegradability together with the excellent absorptivity.

Such properties can be secured by applying a polysaccharide component to be described below as the polysaccharide component and performing cross-linking and polymerization simultaneously. In general, the polysaccharide-based polymer material has excellent biodegradability, but has low water absorption capacity and low cross-linking efficiency for application as an absorbent material. Therefore, in general, to form an absorbent material using a polysaccharide-based material, it is obtained by blending other components with the polysaccharide without applying only the polysaccharide. However, in the present application, a polysaccharide component in which a specific type of functional group is introduced is applied as the polysaccharide component. The polysaccharide component in such a type can perform polymerization by the functional group, and perform cross-linking by the cross-linkable functional group contained in the polysaccharide component as well together with the polymerization. Therefore, such a polysaccharide component can be effectively cross-linked and polymerized while maintaining biodegradability, and can simultaneously exhibit excellent absorption capacity and biodegradability after the cross-linking and polymerization.

As described above, the polysaccharide included in the polysaccharide component is a polymeric substance in which two or more unitary bodies are linked by covalent bonds such as glycosidic bonds, and the representatively known

polysaccharide includes starch, dextrin, or chitosan, and the like. Therefore, in one example, the polysaccharide component may comprise one or two or more selected from the starch, dextrin, and chitosan, and the like. The starch, dextrin, and chitosan included in the polysaccharide component may also be polysaccharides in an oxidized state.

In one example, when the polysaccharide is starch, the weight ratio (amylose: amylopectin) of amylose and amylopectin in the relevant starch may be in a range of about 1:99 to 50:50 or so. In this case, the functional group to be described below may be introduced into either amylose or amylopectin, or may be introduced into both. The reaction of introducing the functional group, which is described below, can occur in both amylose and amylopectin, but more efficient modification may be possible when the content of amylopectin is greater than the content of amylose.

For example, the starch may have a gelatinization temperature in a range of about 50°C to 90°C and a peak viscosity (BU) in a range of 50 to 1000.

As the starch, any known starch may be applied without special limitation, and for example, one or two or more types selected from potato starch, corn starch, rice starch, wheat starch, tapioca starch, and polymer starch may be applied.

Such a polysaccharide may comprise at least two or more monosaccharide unitary bodies linked by covalent bonds (e.g., glycosidic bonds). At this time, the monosaccharide unitary body may be exemplified by the above-described biomolecule, and may be specifically exemplified by glucose, galactose, fructose, xylose, glucosamine, or N-acety lglucosamine, and the like, but is not limited thereto.

In the present application, as the polysaccharide component, a component having simultaneously a radically polymerizable functional group and a non-radically polymerizable functional group is used. Since the polysaccharide component comprises a polysaccharide, a polysaccharide having simultaneously the radically polymerizable functional group and the non-radical polymerizable functional group may be applied as the relevant polysaccharide, or the polysaccharide component may also be formed by mixing a polysaccharide having a radically polymerizable functional group and a polysaccharide having a non-radically polymerizable functional group.

In this specification, the term non-radically polymerizable functional group is a functional group that does not participate in a radical reaction, for example, a functional group that does not contain an unsaturated bond as described below. Such a non-radically polymerizable functional group does not participate in the radical reaction, but can form covalent bonds through chemical reactions with other functional groups, as described below. Such a non-radically polymerizable functional group may be a functional group originally possessed by the polysaccharide or polysaccharide component. For example, the hydroxy group of starch or dextrin, the amino group of chitosan, or the carboxyl group of oxidized starch, and the like may be used as the non-radically polymerizable functional group. Therefore, for example, the non-radically polymerizable functional group may be one or more selected from the group consisting of a hydroxy group, an amino group, and a carboxyl group, but is not limited thereto.

In this specification, the term radically polymerizable functional group means a functional group capable of forming polymer chains through a radical reaction. Such a functional group includes a functional group containing an unsaturated bond (e.g., carbon-carbon double bond). **In** one example, the radically polymerizable functional group may be an alkenyl group or an alkenyl group, or a functional group containing the alkenyl group, or a functional group containing the alkenyl group, or a functional group containing an alkenylene group, or a functional group containing an alkynylene group.

**In** this specification, the term alkenyl or alkenyl group means an alkenyl or alkenyl group having 2 to 20 carbon atoms, 2 to 16 carbon atoms, 2 to 12 carbon atoms, 2 to 8 carbon atoms, or 2 to 4 carbon atoms, unless otherwise specified (for example, vinyl group, or allyl group, etc.). Such an alkenyl or alkenyl group may be linear, branched, or cyclic. Such an alkenyl or alkenyl group may be optionally substituted with one or more substituents.

**In** this specification, the term alkynyl or alkynyl group means an alkynyl or alkynyl group having 2 to 20 carbon atoms, 2 to 16 carbon atoms, 2 to 12 carbon atoms, 2 to 8 carbon atoms, or 2 to 4 carbon atoms, unless otherwise specified (for example, vinyl group or allyl group, etc.). Such an alkynyl or alkynyl group may be linear, branched, or cyclic. Such an alkynyl or alkynyl group may be optionally substituted with one or more substituents.

In this specification, the term alkenylene or alkenylene group means an alkenylene or alkenylene group having 2 to 20 carbon atoms, 2 to 16 carbon atoms, 2 to 12 carbon atoms, 2 to 8 carbon atoms, or 2 to 4 carbon atoms, unless otherwise specified (for example, vinyl group or allyl group, etc.). Such an alkenylene or alkenylene group may be linear, branched, or cyclic. Such an alkenylene or alkenylene group may be optionally substituted with one or more substituents.

In this specification, the term alkynylene or alkynylene group means an alkynylene or alkynylene group having 2 to 20 carbon atoms, 2 to 16 carbon atoms, 2 to 12 carbon atoms, 2 to 8 carbon atoms, or 2 to 4 carbon atoms, unless otherwise specified (for example, vinyl group or allyl group, etc.). Such an alkynylene or alkynylene group may be linear, branched, or cyclic. Such an alkynylene or alkynylene group may be optionally substituted with one or more substituents.

The polysaccharide usually does not contain any radically polymerizable functional group. Therefore, the polysaccharide may be modified to introduce the radically polymerizable functional group. A method of modifying the polysaccharide to introduce the radically polymerizable functional group is not particularly limited, and for example, a method to be described below may be applied.

The polysaccharide thus modified may include a modified monosaccharide unitary body as a unitary body. The

modified monosaccharide unitary body means a unitary body into which a functional group that has not been present in the original unitary body, for example, the radically polymerizable functional group, is introduced through chemical treatment.

In one example, the radically polymerizable functional group introduced into the modified monosaccharide unitary body may be represented by Formula 1 below.

[Formula 1]

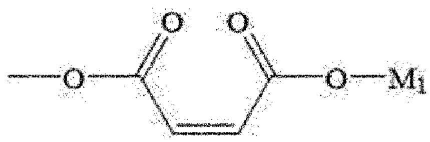

In Formula 1, $M_1$ is hydrogen or a metal, and when $M_1$ is the metal, the O-$M_1$ bond is an ionic bond.

The functional group of Formula 1 may be introduced into the unitary body by bonding the oxygen atom on the left side of Formula 1 above to the skeleton of the unitary body.

The double bond included in the radically polymerizable functional group of Formula 1 may exist in the polymer composition in a state of maintaining the double bond state, or the double bond may exist in a polymerized state. In this case, polymer chains may also exist in the polysaccharide component due to the polymerization reaction.

In Formula 1, $M_1$ is hydrogen or a metal. The type of metal is not particularly limited, which may usually be an alkali metal such as lithium, sodium, potassium, or cesium.

In the polymer, a functional group where $M_1$ in Formula 1 above is hydrogen and a functional group where $M_1$ is a metal may also exist simultaneously.

The functional group may be introduced by reacting the polysaccharide with an unsaturated dicarboxylic acid or its anhydride and substituting the hydroxy group and/or amino group present in the unitary body of the polysaccharide with the functional group. An example of the dicarboxylic acid or anhydride thereof may be exemplified by maleic acid or maleic anhydride, but is not limited thereto, and salts of maleic acid may also be applied.

The functional group of Formula 1 is one example that the radically polymerizable functional group may be introduced into the polysaccharide component, and if the radically polymerizable functional group may be introduced in an appropriate manner, other functional groups other than the functional group of Formula 1 may also be used.

The lower limit of the substitutional rate of the radical polymerizable functional group such as Formula 1 in the polysaccharide component may be 10%, 20%, 30%, 40%, 50%, 60%, 70%, 80%, or 90% or so, and the upper limit thereof may also be 300%, 295%, 290%, 285%, 280%, 275%, 270%, 265%, 260%, 255%, 250%, 245%, 240%, 235%, 230%, 225%, 220%, 215%, 210%, 205%, 200%, 195%, 190%, 185%, 180%, 175%, 170%, 165%, 160%, 155%, 150%, 145%, 140%, 135%, 130%, 125%, 120%, 115%, 110%, 105%, 100%, 95%, 90%, or 85% or so. The substitutional rate may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

In this specification, the substitutional rate is a value indicating how much the hydroxy groups or amino groups, and the like present in the unitary body included in the polysaccharide or polysaccharide component are replaced with predetermined functional groups (e.g., radically polymerizable functional groups), and is an average value of substituted degrees of the respective unitary bodies present in the polysaccharide or polysaccharide component. For example, if the unitary body is a grape sugar (glucose) unit, there are three hydroxy groups in the relevant unit before modification, and therefore, if all the hydroxy groups are substituted with the radically polymerizable functional groups, the substitutional rate of the radically polymerizable functional group for the relevant unit is 300%. However, the substitutional rate is the average value of the substituted degrees of the respective units present in the polysaccharide or polysaccharide component, so that for example, when in a polysaccharide containing 5 grape sugar (glucose) units, the substitutional rates of the respective units are 100%, 0%, 200%, 300% and 100%, the substitutional rate is 140%, which is the average value. Such a substitutional rate can be identified through $^1$H NMR analyses of the polysaccharide or polysaccharide component. That is, since the hydroxy groups or amino groups, and substituted functional groups present in the polysaccharide or polysaccharide component can be quantified through the $^1$H NMR analysis, the substitutional rate can be identified, and if necessary, the substitutional rate can be calculated considering the $^1$H NMR analysis results of the polysaccharide or polysaccharide component before modification. In this way, the method of quantifying functional groups through the $^1$H NMR analysis is known.

The hydroxy group or amino group present in the polysaccharide component must also function as the non-radically polymerizable functional group, so that in order that polymerization by the radically polymerizable functional group and cross-linking by the non-radically polymerizable functional group proceed smoothly, the substitutional rate has

an important meaning. In the present application, effective cross-linking and polymerization are possible by controlling the substitutional rate of the functional groups including the radically polymerizable functional group within the above range.

When the radically polymerizable functional group is a functional group of Formula 1, the polysaccharide component or polysaccharide may include a unitary body of Formula 2 below.

[Formula 2]

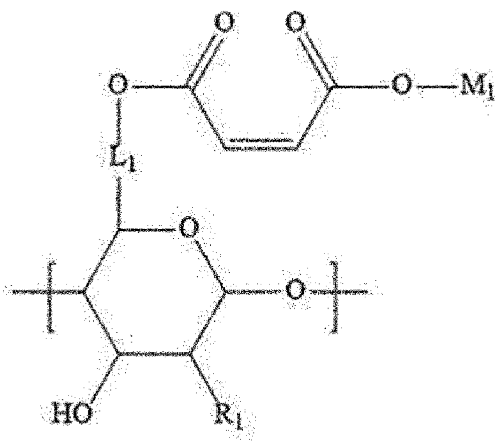

In Formula 2, $R_1$ is a hydroxy group, an amino group, or an alkylcarbonylamino group, $L_1$ is an alkylene group or an alkylidene group, and $M_1$ is hydrogen or a metal. If $M_1$ is the metal, the O-$M_1$ bond of Formula 2 may be an ionic bond. The specific type of metal of $M_1$ in Formula 2 above is the same as described in Formula 1. In Formula 2, the specific type of the alkyl, alkylene group, or alkylidene group is the same as those described at the opening of this specification.

As described in Formula 1, the radically polymerizable functional group of Formula 2 may exist in a state of maintain the double bond, or the double bond may exist in a polymerized state.

In the polysaccharide component, a functional group where $M_1$ in Formula 2 above is hydrogen and a functional group where $M_1$ is a metal may also exist simultaneously.

In Formula 2, when $R_1$ is a hydroxy group, the unitary body may usually be a case derived from a so-called grape sugar unitary body; when $R_1$ is an amino group, the unitary body may usually be a case derived from a so-called glucosamine unitary body; and when $R_1$ is an alkylcarbonylamino group, the unitary body may represent a case derived from N-acetylglucosamine.

To the polysaccharide component, other functional groups may be introduced in addition to the functional groups including the radically polymerizable functional group such as the functional group of Formula 1 above. Such other functional groups include, for example, a functional group represented by Formula 3 below.

[Formula 3]

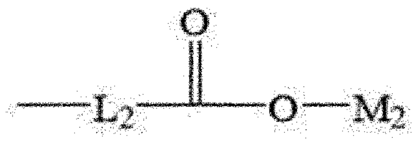

In Formula 3, $L_2$ is an alkylene group or an alkylidene group, $M_2$ is hydrogen or a metal, and when $M_2$ is the metal, the O-$M_2$ bond is an ionic bond. In Formula 3, the specific type of the alkylene group or alkylidene group is the same as defined at the opening of this specification.

The functional group of Formula 3 above may be introduced into the unitary body as $L_2$ on the left side in Formula 3 above is bonded to the skeleton of the unitary body.

In Formula 3, $M_2$ is hydrogen or a metal. The type of the metal is not particularly limited, which may usually be an alkali metal such as lithium, sodium, potassium, or cesium.

In the polysaccharide component, a functional group where $M_2$ in Formula 3 above is hydrogen and a functional group where $M_2$ is a metal may also exist simultaneously.

The functional group can be introduced by reacting the polysaccharide with acetic acid chloride such as chloroacetate and substituting the hydroxy group present in the unitary body of the polymer with the functional group.

The lower limit of the substitutional rate of the functional group of Formula 3 above in the polysaccharide

component may be 10%, 15%, 20%, 25%, 30%, 35%, 40%, 45%, 50%, 55%, 60%, 65%, 70%, 75%, 80%, 85%, 90%, or 95% or so, and the upper limit thereof may be 300%, 295%, 290%, 285%, 280%, 275%, 270%, 265%, 260%, 255%, 250%, 245%, 240%, 235%, 230%, 225%, 220%, 215%, 210%, 205%, 200%, 195%, 190%, 185%, 180%, 175%, 170%, 165%, 160%, 155%, 150%, 145%, 140%, 135%, 130%, 125%, 120%, 115%, 110%, 105%, 100%, 95%, 90%, 85%, 80%, 75%, or 70% or so. The substitutional rate may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits. The definition and measurement method of the substitutional rate are the same as those defined for the radically polymerizable functional group, which can be identified through the $^1$H NMR analysis equally.

In one example, the unitary body containing the functional group of Formula 3 above may be a unitary body represented by Formula 4 below.

[Formula 4]

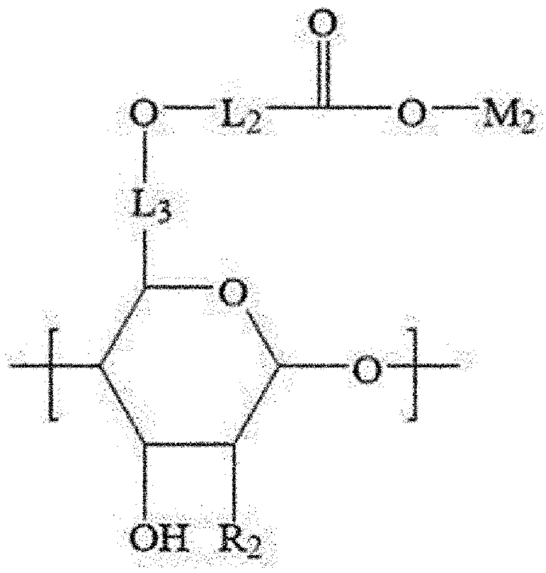

In Formula 4, $R_2$ is a hydroxy group, an amino group, or an alkylcarbonylamino group, $L_2$ and $L_3$ are each independently an alkylene group or an alkylidene group, and $M_2$ is hydrogen or a metal.

When $M_2$ is the metal, the O-$M_2$ bond is an ionic bond.

The specific type of the metal of $M_2$ in Formula 4 above is the same as described in Formula 3.

In Formula 4, the specific type of the alkyl, alkylene group, or alkylidene group is the same as defined at the opening.

In the polysaccharide, a functional group in which $M_2$ in Formula 4 above is hydrogen and a functional group in which $M_2$ is a metal may also exist simultaneously.

The polysaccharide component may have an appropriate level of molecular weight. For example, in one example, the polymer composition, polymer material, or polymer may have a weight average molecular weight (Mw) in a range of about 500 g/mol to 1,000,000 g/mol. Within such a range, the desired sufficient degree of cross-linking can be imparted thereto when necessary, and the obtained polymer material can stably exhibit the desired properties (biodegradability and absorption capacity, etc.).

The polymer composition may comprise, as an additional component, a cross-linking agent cross-linking the polysaccharide component. Such a cross-linking agent may be a compound having a functional group capable of reacting with the non-radically polymerizable functional group of the polysaccharide component.

The lower limit of the number of functional groups, in which the cross-linking agent has, capable of reacting with the non-radically polymerizable functional group of the polysaccharide component may be 2, 3, or 4, and the upper limit thereof may be 10, 9, 8, 7, 6, 5, 4, 3, or 2. The number of functional groups may be within a range of more than or equal to, or more than any one of the above-described lower limits; or within a range of less than or equal to, or less than any one of the above-described upper limits while being more than or equal to, or more than any one of the above-described lower limits.

The type of cross-linking agent is not particularly limited, if it contains a functional group reacting with the non-radically polymerizable functional group of the polysaccharide component.

For example, as the cross-linking agent, one or more selected from the group consisting of polyfunctional epoxy compounds, epoxy silane compounds, amino silane compounds, epichlorohydrin, aldehyde compounds such as formaldehyde or glutaraldehyde, oxidized sucrose, acyl chloride, carbonate, diamine, diol, carbon disulfide, phosphoryl chloride, divinyl benzene, organic acids, and organic acid anhydrides may be used.

For performing effective cross-linking without impairing the polymerization efficiency by the above-described radically reactive functional group, and securing the desired physical properties, it may be advantageous to use a specific type of cross-linking agent.

In one example, as the cross-linking agent, an organic acid having two or more carboxyl groups, an anhydride of the organic acid, or an organic compound having two or more formyl groups may be applied.

The organic acid, anhydride of the organic acid, or organic compound may be composed of only carbon, oxygen, and hydrogen.

When the cross-linking agent is applied, for example, a cross-linked structure containing an ester bond formed by the reaction between the carboxyl group of the cross-linking agent and the hydroxy group in the polysaccharide component, or a covalent bond such as Formula 5 below formed by the reaction between the formyl group of the cross-linking agent and the amino group in the polysaccharide component may be implemented.

[Formula 5]

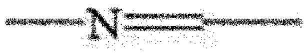

The polysaccharide or polysaccharide component is present on one side of both sides of the bond of Formula 5 above, and the cross-linking agent is present on the other side.

The type of the usable organic acid as the cross-linking agent is not particularly limited, but an organic acid with a molecular weight of about 90 g/mol to 300 g/mol or about 100 g/mol to 250 g/mol may be used. The range of the number of carboxyl groups in the organic acid is the same as the number of non-radically polymerizable functional groups in the above-mentioned cross-linking agent.

Such an organic acid may be exemplified by citric acid, succinic acid, pimelic acid, or adipic acid, but is not limited thereto.

The organic acid or its anhydride may be used as the cross-linking agent.

The type of the usable organic compound having two or more formyl groups as the cross-linking agent is not particularly limited, but an organic compound with a molar mass of about 90 g/mol to 200 g/mol, or about 90 g/mol to 150 g/mol may be used. The range of the number of formyl groups in the organic compound is the same as the number of non-radically polymerizable functional groups in the above-mentioned cross-linking agent.

Such an organic compound may be exemplified by glutaraldehyde or the like, but is not limited thereto.

The lower limit of the weight ratio of the cross-linking agent relative to 100 parts by weight of the polysaccharide component in the polymer composition, if applicable, may be 1 part by weight, 5 parts by weight, 10 parts by weight, 15 parts by weight, 20 parts by weight, or 25 parts by weight or so, and the upper limit thereof may be 100 parts by weight, 70 parts by weight, 50 parts by weight, 45 parts by weight, 40 parts by weight, 35 parts by weight, 30 parts by weight, 25 parts by weight, 20 parts by weight, 15 parts by weight, or 10 parts by weight or so. The ratio may be within a range of more than or equal to, or more than any one of the above-described lower limits; or within a range of less than or equal to, or less than any one of the above-described upper limits; or within a range of less than or equal to, or less than any one of the above-described upper limits while being more than or equal to, or more than any one of the above-described lower limits.

Within such a range, efficient cross-linking may be possible without impairing the polymerization efficiency by the radically polymerizable functional group of the polysaccharide component.

The polymer composition may comprise any necessary components in addition to the polysaccharide component and cross-linking agent.

For example, an initiator component (e.g., polymerization initiator) capable of inducing polymerization by the double bond may be included in the polymer composition.

As such an initiator component, any known component may be used without special limitation if it is capable of inducing polymerization of the radically polymerizable functional group. For example, a known radical polymerization initiator may be used as the initiator component. For example, an oxidizing agent such as ammonium persulfate or ammonium cerium nitrate, or other radical polymerization initiators may be used as the initiator component.

The ratio of the initiator component is not particularly limited, where it may be used in a catalytic amount capable of inducing a polymerization reaction of the radically polymerizable functional group.

For example, in an environment where an oxidizing agent, which is the initiator component, is present, the polymerization by the radically polymerizable functional groups present in the polysaccharide component, and the cross-linking, polymerization, or grafting by radicals generated by oxidation of the oxidizing agent and the radically polymerizable functional groups may proceed to form polymer chains.

The present application also relates to a polymer material comprising the polymer composition or a polymer material formed by the polymer composition. The polymer material may also simply be called a polymer (or hydrogel).

The polymer material may contain polymer chains formed by polymerization of the radically polymerizable functional groups of the polysaccharide component of the polymer composition and covalent bonds formed by the reaction of the non-radically polymerizable functional groups of the polysaccharide component and the functional groups of the cross-linking agent.

The specific types of the radically polymerizable functional group and the non-radically polymerizable functional group, the substitutional rate of the functional group in the polysaccharide or polysaccharide component, and the type of the cross-linking agent are as described above. Also, the covalent bond may be an ester bond, as described above, or may be a covalent bond of Formula 5 above.

Such a polymer material may be the above-described biodegradable material, may be the absorbent material, or may be the absorbent material while being the biodegradable material. Therefore, the material may exhibit the centrifuge retention capacity and/or biodegradability as described above.

The polymer material can be used for various applications by exhibiting excellent absorptivity and biodegradability simultaneously.

For example, the polymer material may be used as sanitary products such as diapers or sanitary napkins, or absorbent materials applied to other applications requiring absorption. If necessary, further cross-linking, surface treatment, or physical grinding processes may also be performed on the polymer material to increase the efficiency for use as the sanitary products or absorbent materials.

Therefore, the present application relates to an absorbent material or sanitary product (e.g. diapers, sanitary napkins, etc.) comprising the polymer material.

The specific method of forming the absorbent material or sanitary product by applying the polymer material is not particularly limited, and for example, the method of forming the absorbent material or sanitary product by applying the existing SAP may be used in the same manner.

## Advantageous Effects

The present application can provide a polymer composition and a use thereof. Th polymer composition comprises a polysaccharide component, where the polysaccharide component contains a radically polymerizable functional group and a non-radically polymerizable functional group. Such a polysaccharide component can form a polymer including polymer chains formed by the polymerization of the radically polymerizable functional groups and covalent bonds formed by the reaction of the non-radically polymerizable functional groups. The polymer can form an absorbent material having excellent absorptivity, form a biodegradable material having excellent biodegradability, or form a material which is an absorbent material and simultaneously a biodegradable material. The present application can also provide a use of the polymer composition or the polymer.

## Description of Drawings

Figure 1 is a view showing $^1$H NMR analysis results of the modified polysaccharide prepared in Preparation Example 1.

Figure 2 is a view showing $^1$H NMR analysis results of the modified polysaccharide prepared in Preparation Example 2.

## Mode for Invention

Hereinafter, the present application will be described in detail through examples and comparative examples, but the scope of the present application is not limited by the following examples.

### 1. Centrifuge retention capacity (CRC) evaluation

Centrifuge retention capacity (CRC) was measured according to EDANA (European Disposables and Nonwovens Association) WSP 241.3. About 0.2 g ($W_0$) of the obtained polymer was placed in a non-woven bag, sealed, and then submerged in a physiological saline solution. As the physiological saline solution, an aqueous NaCl solution with a

concentration of 0.9 wt% was used. The state was maintained for 30 minutes or so, water was removed from the bag for 3 minutes under a condition of 250 G using a centrifuge, and the mass (g, $W_2$) of the bag was measured. The same nonwoven bag containing no polymer was submerged in the same physiological saline solution. The state was maintained for 30 minutes or so, water was removed from the bag for 3 minutes under a condition of 250 G using a centrifuge, and the mass (g, $W_1$) of the bag was measured. The CRC (g/g) was calculated by substituting the measurement results into Equation A below. The evaluation was conducted under constant temperature and humidity conditions (23 ± 1°C, relative humidity: 50 ± 10%).

[Equation A]

$$\text{CRC (g/g)} = \{[W_2(g) - W_1(g)]/W_0(g)\} - 1$$

**2. Measurement of biodegradability**

Biodegradability was measured in the manner specified in ISO 14855-1 (2005) standard. The above standard is a method of measuring aerobic biodegradability of plastic materials under a composting condition, which is a method that the biodegradability of a polymer is calculated by quantifying the amount of carbon dioxide emitted by microorganisms metabolizing the relevant material. As the polymer was applied to the composting condition according to the standard, the biodegradability was measured for 6 months, and the biodegradability was obtained as the ratio of the theoretical carbon dioxide generation amount and the actual carbon dioxide generation amount of the material. The theoretical carbon dioxide generation amount and biodegradability are obtained according to the following equations C and D, respectively.

$$\text{Theoretical carbon dioxide generation amount (ThCO2, g/container)} = \text{MTOT} \times \text{CTOT} \times (44/12) \qquad \text{[Equation C]}$$

In Equation C, MTOT is the amount (g) of total dry solid content in the test material (polymer) added to the compost at the start of the measurement, and CTOT means the ratio (g/g) of organic carbon contained in the total dry solid content of the test material.

[Equation D]

$$\text{Biodegradability (\%)} = [\{(CO2)T-(CO2)B\}/ThCO2] \times 100$$

In Equation D, (CO2)T is the accumulated amount (g/container) of carbon dioxide generated from the composting container containing the test material, (CO2)B is the average (g/container) of carbon dioxide accumulated amounts generated from the inoculum source container, and ThCO2 is the theoretical carbon dioxide generation amount confirmed in Equation C above.

**Preparation Example 1.**

A polysaccharide (modified starch) (Compound A) containing a modified monosaccharide unitary body of Formula A below was prepared in the following manner. The modified monosaccharide unitary body of Formula A below is a monosaccharide unitary body into which a maleic acid group (a substituent where $M_1$ in Formula 1 is a hydrogen atom) is introduced.

[Formula A]

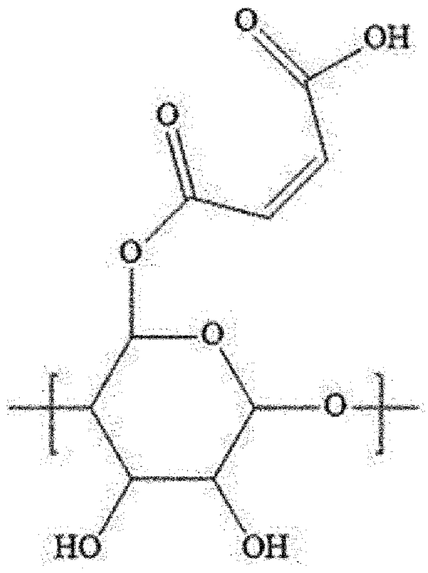

15 g of starch and 50 mL of DMSO (dimethyl sulfoxide) were added to a 500 mL RBF (Round Bottom Flask), and stirred at 65°C for 2 hours to be gelatinized. As the starch, potato starch was used. About 30 g of maleic anhydride was added to the gelatinized starch and reacted at 65°C for 3 hours or so. After completion of the reaction, the temperature was lowered to room temperature (about 25°C), and acetone was added to generate a precipitate. The precipitate was recovered and dried in a vacuum drying oven at 40°C for one day to obtain a solid target product (Compound A).

The substitutional rate of the obtained target product (Compound A) can be obtained through a $^1$H NMR analysis. The $^1$H NMR analysis is performed at room temperature (about 25°C) using a $^1$H NMR spectrometer including a Varian Unity Inova (500 MHz) spectrometer with a triple resonance 5 mm probe. In the $^1$H NMR analysis, Bruker's Avance Neo instrument was used. Specifically, 50 mg of the obtained solid target product (Compound A) and 200 mg of 30% DCl in $D_2O$ solution are mixed, stirred at 50°C for 1 hour or so to induce a hydrolysis reaction, and the $^1$H NMR analysis can be performed. The substitutional rate of the maleic acid group to the starch was confirmed by the $^1$H NMR analysis. Figure 1 shows the results of $^1$H NMR analysis performed on Compound A above, and the substitutional rate calculated based on this was about 81% or so.

**Preparation Example 2.**

A polysaccharide (modified chitosan) (Compound B) containing a modified monosaccharide unitary body of Formula B below was prepared in the following manner. The modified monosaccharide unitary body of Formula B below is a monosaccharide unitary body into which a maleic acid group (a substituent where M1 is a hydrogen atom in Formula 1) is introduced.

[Formula B]

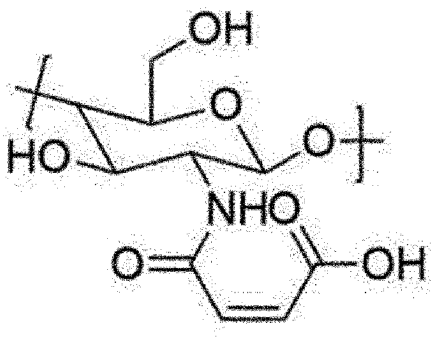

15 g of chitosan and 300 mL of DMSO (dimethyl sulfoxide) were added to a 500 mL RBF (Round Bottom Flask), and stirred at 65°C for 30 minutes to be gelatinized. About 30 g of maleic anhydride was added to the gelatinized chitosan, and reacted at 65°C for 3 hours or so. After completion of the reaction, the temperature was lowered to room temperature (about 25°C), and acetone was added to generate a precipitate.

The precipitate was recovered and dried in a vacuum drying oven at 40°C for one day to obtain the solid target product (Compound B).

The substitutional rate of the obtained target product (Compound B) can be obtained through a $^1H$ NMR analysis. The $^1H$ NMR analysis is performed at room temperature (about 25°C) using a $^1H$ NMR spectrometer including a Varian Unity Inova (500 MHz) spectrometer with a triple resonance 5 mm probe. In the $^1H$ NMR analysis, Bruker's Avance Neo instrument was used. Specifically, 50 mg of the obtained solid target product (Compound B) and 200 mg of 30% DCl in $D_2O$ solution are mixed, stirred at 50°C for 1 hour or so to induce a hydrolysis reaction, and the $^1H$ NMR analysis can be performed.

The substitutional rate of the maleic acid group to the chitosan was confirmed by the $^1H$ NMR analysis. Figure 2 shows the results of $^1H$ NMR analysis performed on Compound B above, and the substitutional rate calculated based on this was about 94% or so.

**Example 1.**

The compound (A) of Preparation Example 1 and a cross-linking agent (citric acid) were mixed in distilled water in a weight ratio of 2.8:0.2 (compound (A): cross-linking agent), and ammonium cerium nitrate as an initiator was added thereto in a ratio of at about 2 mol% to prepare a polymer composition. Subsequently, the mixture was stirred at 35°C for 2 hours to proceed with polymerization and cross-linking by double bonds, thereby preparing a biodegradable polymer having absorption capacity. Ethanol was added to precipitate the polymer, and it was dried in a vacuum drying oven at 40°C.

**Example 2.**

A polymer material was prepared in the same manner as in Example 1, except that the ratio of the compound (A) of Preparation Example 1 and a cross-linking agent (citric acid) was changed to a weight ratio of 2.6:0.4 (compound (A): cross-linking agent).

**Example 3.**

A polymer material was prepared in the same manner as in Example 1, except that the ratio of the compound (A) of Preparation Example 1 and a cross-linking agent (citric acid) was changed to a weight ratio of 2.4:0.6 (compound (A): cross-linking agent).

**Comparative Example 1.**

A polymer material was prepared as in Example 1 by applying only the compound (A) without applying the cross-linking agent.

**Comparative Example 2**

A polymer material was prepared as in Example 1 by applying only citric acid without applying the compound (A).

**Example 4.**

The compound (B) of Preparation Example 2 and glutaraldehyde as a cross-linking agent were mixed in distilled water in a weight ratio of 2.8:0.2 (compound (B): cross-linking agent), and ammonium cerium nitrate as an initiator was added thereto in a ratio of about 2 mol% to prepare a polymer composition.

The polymer composition was stirred at 35°C for 2 hours to proceed with polymerization and cross-linking reactions by double bonds, thereby preparing a biodegradable polymer having absorption capacity. Ethanol was added to precipitate the polymer, and it was dried in a vacuum drying oven at 40°C.

**Example 5.**

A polymer material was prepared in the same manner as in Example 4, except that the ratio of the compound (B) of Preparation Example 2 and a cross-linking agent (glutaraldehyde) was changed to a weight ratio of 2.6:0.4 (compound (B): cross-linking agent).

**Example 6**

A polymer material was prepared in the same manner as in Example 4, except that the ratio of the compound (B) of Preparation Example 2 and a cross-linking agent (glutaraldehyde) was changed to a weight ratio of 2.4:0.6 (compound (B): cross-linking agent).

**Comparative Example 3.**

A polymer material was prepared as in Example 4 by applying only the compound (B) without applying the cross-linking agent.

**Comparative Example 4**

A polymer material was prepared as in Example 4 by applying only glutaraldehyde without applying the compound (B).

The physical property measurement results for the polymer materials of Examples and Comparative Examples are as shown in Table 1 below.

[Table 1]

| | Example | | | | | | Comparative Example | | | |
|---|---|---|---|---|---|---|---|---|---|---|
| | 1 | 2 | 3 | 4 | 5 | 6 | 1 | 2 | 3 | 4 |
| CRC(g/g) | 17.4 | 16.3 | 16.0 | 23.1 | 22.0 | 22.3 | 15.2 | 1.2 | 23.3 | 1.0 |
| Biodegradability (%) | 85 | 81 | 72 | 71 | 73 | 72 | 80 | 43 | 68 | - |

When Examples 1 to 3 and Comparative Example 1, and Examples 4 to 6 and Comparative Example 3 are compared, it can be confirmed that in the case of Examples, they exhibit superior absorption capacity and/or biodegradability relative to Comparative Examples 1 and 3 in which only the polysaccharide component has been used.

**Claims**

1. A polymer composition comprising:

   a polysaccharide component having a radically polymerizable functional groups and a non-radically polymerizable functional group; and
   a compound having two or more functional groups capable of reacting with the non-radically polymerizable functional group.

2. The polymer composition according to claim 1, wherein the non-radically polymerizable functional group is a hydroxy group, an amino group, or a carboxyl group.

3. The polymer composition according to claim 1, wherein the radically polymerizable functional group comprises one or more selected from the group consisting of an alkenyl group, an alkynyl group, an alkenylene group, and an alkynylene group.

4. The polymer composition according to claim 1, wherein a substitutional rate of the radically polymerizable functional group in the polysaccharide component is in a range of 10% to 300%.

5. The polymer composition according to claim 1, wherein the radically polymerizable functional group is a functional group of Formula 1 below:

[Formula 1]

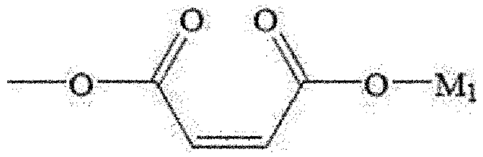

wherein, $M_1$ is hydrogen or a metal, and when $M_1$ is the metal, the O-$M_1$ bond is an ionic bond.

**6.** The polymer composition according to claim 1, wherein the polysaccharide component comprises a unitary body of Formula 2 below:

[Formula 2]

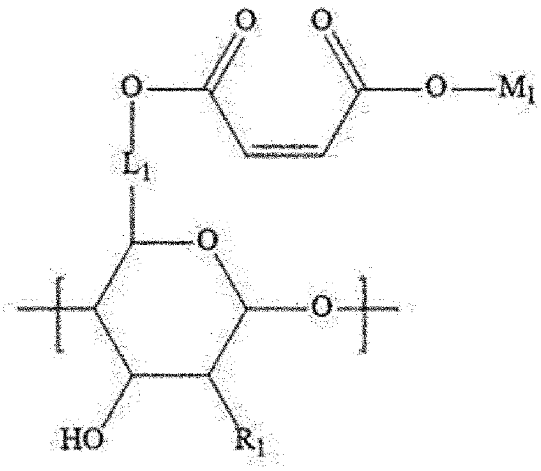

wherein, $R_1$ is a hydroxy group, an amino group, or an alkylcarbonylamino group, $L_1$ is an alkylene group or an alkylidene group, $M_1$ is hydrogen or a metal, and when $M_1$ is the metal, the O-$M_1$ bond is an ionic bond.

**7.** The polymer composition according to claim 1, wherein the compound is an organic acid having two or more carboxyl groups, an anhydride of the organic acid, or an organic compound having two or more formyl groups.

**8.** The polymer composition according to claim 7, wherein the organic acid has a molar mass in a range of 90 g/mol to 300 g/mol, and the organic compound has a molar mass in a range of 90 g/mol to 200 g/mol.

**9.** The polymer composition according to claim 1, wherein the compound is citric acid, citric anhydride, succinic acid, succinic anhydride, pimelic acid, pimelic anhydride, adipic acid, adipic anhydride, or glutaraldehyde.

**10.** The polymer composition according to claim 1, wherein the compound is present in an amount of 1 part by weight to 50 parts by weight relative to 100 parts by weight of the polysaccharide component.

**11.** The polymer composition according to claim 1, further comprising a polymerization initiator.

**12.** The polymer composition according to claim 1, further comprising a radical polymerization initiator.

**13.** A polymer comprising:

a polysaccharide component having a radically polymerizable functional group and a non-radically polymerizable functional group; and
a compound having two or more functional groups capable of reacting with the non-radically polymerizable functional group, wherein

the radically polymerizable functional group of the polysaccharide component forms polymer chains, and the non-radically polymerizable functional group of the polysaccharide component forms covalent bond with the functional groups of the compound.

**14.** The polymer according to claim 13, wherein the covalent bond is an ester bond or a bond of Formula 5 below:

[Formula 5]

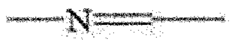

**15.** The polymer according to claim 13, wherein the compound is an organic acid having two or more carboxyl groups, an anhydride of the organic acid, or an organic compound having two or more formyl groups.

**16.** The polymer according to claim 15, wherein the organic acid has a molar mass in a range of 90 g/mol to 300 g/mol, and the organic compound has a molar mass in a range of 90 g/mol to 200 g/mol.

**17.** The polymer according to claim 13, wherein the compound is citric acid, citric anhydride, succinic acid, succinic anhydride, pimelic acid, pimelic anhydride, adipic acid, adipic anhydride, or glutaraldehyde.

**18.** The polymer according to claim 13, wherein the polymer has a centrifuge retention capacity of 10 g/g or more according to EDANA (European Disposables and Nonwovens Association) method WSP 241.3.

**19.** The polymer according to claim 13, wherein the polymer has biodegradability of 60% or more.

**20.** An absorbent material comprising the polymer of claim 13.

[Figure 1]

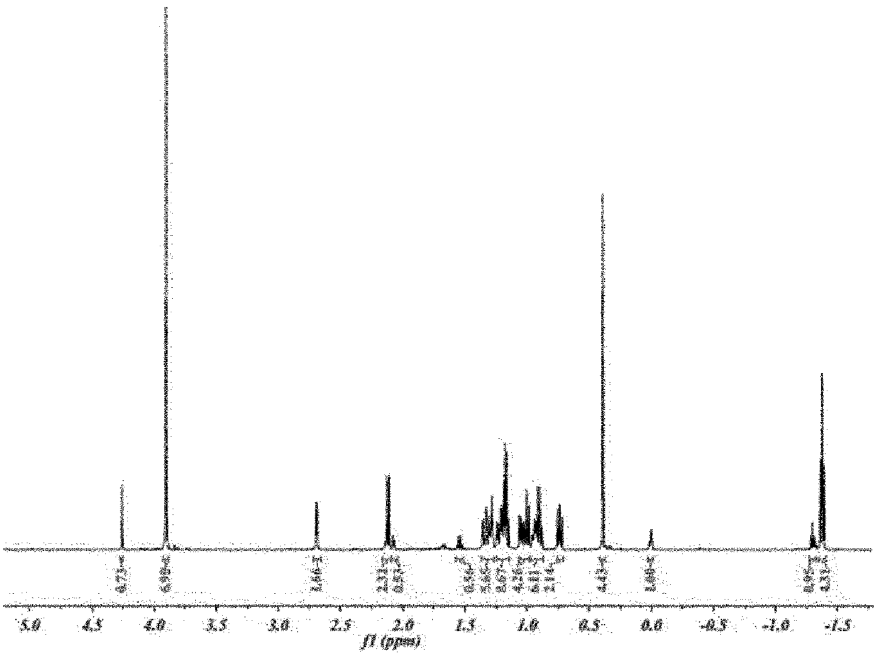


[Figure 2]

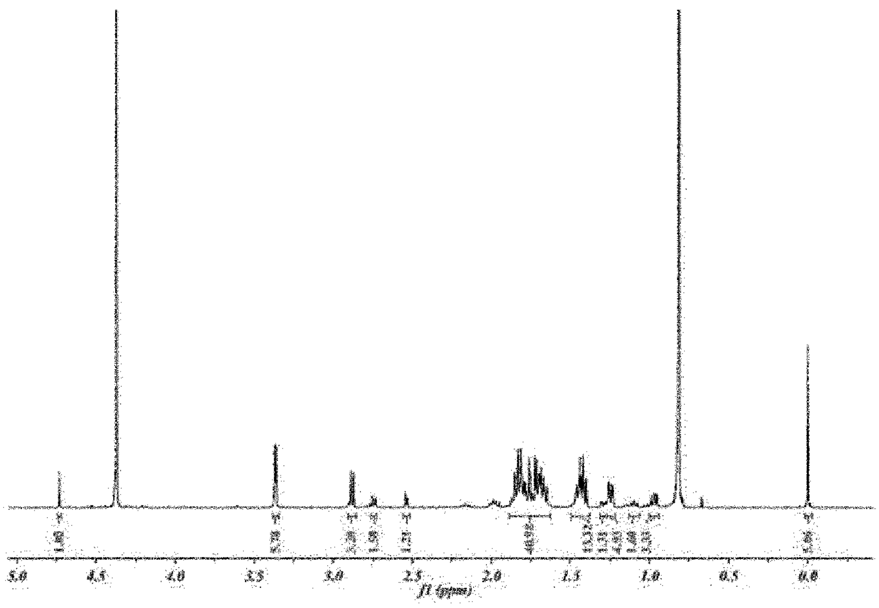

## INTERNATIONAL SEARCH REPORT

International application No.
**PCT/KR2023/012393**

**A. CLASSIFICATION OF SUBJECT MATTER**

**C08B 31/00**(2006.01)i; **C08B 37/08**(2006.01)i; **C08L 3/04**(2006.01)i; **C08L 5/08**(2006.01)i; **C08K 5/00**(2006.01)i

According to International Patent Classification (IPC) or to both national classification and IPC

**B. FIELDS SEARCHED**

Minimum documentation searched (classification system followed by classification symbols)

C08B 31/00(2006.01); A61L 15/00(2006.01); A61L 15/60(2006.01); B01J 20/26(2006.01); B01J 20/30(2006.01); C08B 31/04(2006.01); C08F 220/06(2006.01); C08F 251/00(2006.01); C09K 3/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 다당류(polysaccharide), 흡수성수지(super-absorbent, SAP), 라디칼 중합성 관능기(radical polymerizable functional group), 중합개시제(initiator)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 5789570 A (BUCHHOLZ, S. et al.) 04 August 1998 (1998-08-04)<br>See columns 1, 4, 5 and 9; and claims 1 and 2. | 1-10<br>11-20 |
| Y | KR 10-2022-0041752 A (LG CHEM, LTD.) 01 April 2022 (2022-04-01)<br>See claims 1-3, 6 and 8; and paragraphs [0171]-[0179]. | 11-20 |
| X<br>Y | CN 114042439 A (23 UNITS OF THE CHINESE PEOPLE`S LIBERATION ARMY 96901 FORCE) 15 February 2022 (2022-02-15) | 1-5,10<br>11-13,18-20 |
| A | WO 02-38614 A1 (GROUPE LYSAC INC./LYSAC GROUP INC.) 16 May 2002 (2002-05-16)<br>See pages 12-17 and 21; and claims 1-69. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2023** | **29 November 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

INTERNATIONAL SEARCH REPORT

International application No.
PCT/KR2023/012393

C. DOCUMENTS CONSIDERED TO BE RELEVANT

| Category* | Citation of document, with indication, where appropriate, of the relevant passages | Relevant to claim No. |
|---|---|---|
| A | KR 10-2021-0067312 A (UKSEUNG CHEMICAL CO., LTD.) 08 June 2021 (2021-06-08) See claims 1-20. | 1-20 |

Form PCT/ISA/210 (second sheet) (July 2022)

**INTERNATIONAL SEARCH REPORT**
**Information on patent family members**

International application No.
**PCT/KR2023/012393**

| Patent document cited in search report | Publication date (day/month/year) | Patent family member(s) | Publication date (day/month/year) |
|---|---|---|---|
| US 5789570 A | 04 August 1998 | DE 000004442606 A1 | 05 June 1996 |
| | | DE 000004442606 C2 | 17 September 1998 |
| | | EP 0714914 A1 | 05 June 1996 |
| | | EP 0714914 B1 | 16 June 1999 |
| | | JP 08-208702 A | 13 August 1996 |
| KR 10-2022-0041752 A | 01 April 2022 | CN 114901714 A | 12 August 2022 |
| | | EP 4063413 A1 | 28 September 2022 |
| | | JP 2023-509980 A | 10 March 2023 |
| | | US 2023-0087087 A1 | 23 March 2023 |
| | | WO 2022-065843 A1 | 31 March 2022 |
| CN 114042439 A | 15 February 2022 | CN 114042439 B | 30 June 2023 |
| WO 02-38614 A1 | 16 May 2002 | AU 2002-18086 A1 | 21 May 2002 |
| | | CA 2325643 A1 | 10 May 2002 |
| | | CA 2351253 A1 | 10 May 2002 |
| | | CA 2362006 A1 | 10 May 2002 |
| | | CA 2362006 C | 06 April 2010 |
| | | US 2003-0027787 A1 | 06 February 2003 |
| | | US 7365190 B2 | 29 April 2008 |
| KR 10-2021-0067312 A | 08 June 2021 | KR 10-2322774 B1 | 08 November 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220104557